# EUROPEAN PATENT SPECIFICATION

(11) **EP 4 641 036 B1**
(45) Date of publication and mention of the grant of the patent: **29.04.2026**
(21) Application number: 24172052.3
(22) Date of filing: 24.04.2024
(51) Int. Cl.: F16C 9/04, F16C 9/06, F16C 43/02

(54) **A CONNECTING ROD FOR A VEHICLE**
PLEUELSTANGE FÜR EIN FAHRZEUG
BIELLE POUR UN VÉHICULE

(43) Date of publication of application: 29.10.2025
(73) Proprietor: VOLVO TRUCK CORPORATION, 405 08 Göteborg (SE)
(72) Inventor: KUYLENSTIERNA, Claes, 435 44 Mölnlycke (SE)
(74) Representative: Zacco Sweden AB

(56) References cited:
- DE-A1- 102004 002 967
- US-B1- 6 357 321

## Description

### TECHNICAL FIELD

The disclosure relates generally to a connecting rod. In particular aspects, the disclosure relates to a connecting rod for a vehicle. There is also disclosed a connecting rod assembly comprising such a connecting rod, and there is also disclosed a vehicle comprising such a connecting rod or connecting rod assembly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A connecting rod in a vehicle may serve as a link between a piston of an engine and a crankshaft. The connecting rod turns the reciprocating motion of the piston into a rotational motion of the crankshaft. The part of the connecting rod that is connected to the crankshaft is commonly referred to as the big end. The big end is supported by a bearing. In order to assemble the bearing into the big end, it is known to fracture split the big end into two halves, placing the bearing and then reassembling the two halves. It may, however, result in quite a challenge to reassemble the big end in such way that the two split surfaces mate accurately, considering that the split surfaces may sometimes be too smooth.

US 6 357 321 B1 discloses a connecting rod according to the preamble of claim 1.

### SUMMARY

According to a first aspect of the disclosure, there is provided a connecting rod for a vehicle, the connecting rod comprising:
a small end configured to be operatively connected to a piston of a vehicle,
a big end configured to be operatively connected to a crankshaft of the vehicle, and
a shank extending from the small end to the big end, and
at least one fastener,
wherein the big end comprises:
   - a base part located adjacent to the shank, and
   - a cap part,
wherein the cap part is connectable to the base part, by said at least one fastener, into an assembled state of the big end, and is disconnectable from the base part into a disassembled state of the big end,
wherein, in said assembled state of the big end, the base part and the cap part together define an inner circular surface of the big end, the inner circular surface defining a central opening which is configured to receive and house two bearing shells for contacting said inner circular surface,
wherein the base part is provided with a first groove and the cap part is provided with a second groove, wherein in said assembled state, the first groove and the second groove together form a through hole extending from an external surface of the big end to said inner circular surface. The first aspect of the disclosure may seek to enable a facilitation of accurately mating the cap part with the base part when bringing them together into the assembled state of the big end, irrespectively of whether the mating surfaces of the base part and the cap part are smooth or rough. A technical benefit may include that, by providing said though hole forming grooves, they enable any appropriate element to be received in one of the grooves, which element can then align and/or guide the other one of the grooves when bringing the cap part and base part together, thereby facilitating proper alignment between the cap part and the base part.

Optionally in some examples, including in at least one preferred example, the big end may be a fracture-split big end, wherein the base part and the cap part may form the split parts of the big end, each one presenting a fracture surface, wherein the first and the second grooves are provided in a respective one of said fracture surfaces. Although fracture surfaces may often be quite rough, it nevertheless happens that fracture surfaces are too smooth, making it difficult to find the correct mating orientation. A technical benefit may therefore include that, since fracture surfaces may sometimes be quite smooth, it may be challenging to accurately mate the two surfaces, but in combination with the through hole forming grooves an accurate mating is made possible even with less roughness of the fracture surfaces.

Optionally in some examples, including in at least one preferred example, the through hole may have a longitudinal axis, wherein, in said assembled state of the big end, the longitudinal axis is offset relative to the fracture surfaces. A technical benefit may include that hereby a guiding element, such as a pin, rod, etc. which is provided in the through hole, may be enabled to remain in one of the cap part and the base part upon disconnecting the cap part from the base part into the disassembled state of the big end, and to subsequently act as a guide when the cap part and the base part are rejoined. By having the longitudinal axis offset relative to the fracture surfaces, one of the grooves will be larger than the other one of the grooves that form the through hole. Hereby, upon disconnecting the cap part from the base part, any guiding element in the through hole, will be more likely to stay in the larger one of the grooves. Thus, the risk of losing such a guiding element is reduced, and reassembling is facilitated.

Optionally in some examples, including in at least one preferred example, the depth of one of the first and second grooves may be greater than the depth of the other one of the first and second grooves. This too may include a technical benefit that hereby a guiding element, such as a pin, rod, etc. which is provided in the through hole, may be enabled to remain in one of the cap part and the base part upon disconnecting the cap part from the base part into the disassembled state of the big end, and to subsequently act as a guide when the cap part and the base part are rejoined.

Optionally in some examples, including in at least one preferred example, the inner circular surface of the big end may define and extend around a geometrical centre axis, wherein the big end has a width extending in parallel with said geometrical centre axis, said width extending from a first width end portion to a second width end portion, wherein the through hole may be located closer to one of said width end portions than to the other one. A technical benefit may include that this provides a poka-yoke function. In other words, by having the through hole laterally offset with respect to the width of the big end, i.e. having the through hole closer to one end portion than to another end portion (said width extending between said end portions), when joining the cap part and the base part from the disassembled state, the risk of incorrect assembling can be reduced. If for example the cap part is turned 180° from its intended orientation, and you try to assemble the cap part to the base part, the two grooves will not be able to form the through hole, thus being indicative of incorrect alignment. If you have an additional element inserted in one of the grooves, which element is provided for receiving and guiding the other one of the grooves during assembling, then it may not be possible to mate the two parts if they are incorrectly oriented relative to each other. This further reduces the risk of inadvertently aligning the two parts incorrectly.

Optionally in some examples, including in at least one preferred example, in said assembled state of the big end, the longitudinal extension of the through hole may be substantially perpendicular to the longitudinal extension of said at least one fastener. A technical benefit may include that having a tightening force perpendicular to the longitudinal extension of the through hole may allow for proper alignment with reduced risk of stress and/or strain near the area of the through hole.

Optionally in some examples, including in at least one preferred example, the connecting rod may further comprise a guide configured to extend inside said through hole and to protrude from the inner circular surface into said central opening so as to act as a rotational stop to prevent bearing shells that have been received from moving in a circumferential direction along the inner circular surface. A technical benefit may include that seizures of the bearing may be avoided. In particular, in conventional connecting rods, the bearing shells may start to rotate in the big end, which results in problems with seizures of the bearing. By providing a guide, which may not only facilitate in assembling the cap part to the base part, but which additionally extends into said central opening, such a guide may rotationally lock the bearing shells. Thus, a guide in this example may have dual functionality, namely said rotational locking functionality as well as the functionality of guiding two big end halves when being reassembled.

Optionally in some examples, including in at least one preferred example, the guide may comprise, or may be in the form of, a guide pin having an outer diameter which substantially corresponds to the inner diameter of the through hole such that the guide pin has circumferential contact with wall portions defining said through hole. A technical benefit may include that this provides for a more accurate guiding function when the cap part and the base part are joined together. When manufacturing the connecting rod, the big end may initially suitably be provided with a bore hole (through hole) of a predefined dimension which substantially corresponds to a guide pin. Then, the big end may be split into two halves, i.e. into a base part and a cap part. By making the splitting at the level of the through hole, the base part will be provided with a first groove and the cap part will be provided with a second groove, which together will again form the through hole when the cap part and base part are reassembled (e.g. after the bearing shells have been put in place). The guide pin may be placed in one of the grooves, typically in the deeper one of the grooves if they are of different depths, and may thereby assist in correctly reassembling the base part and the cap part. The guide pin may in the assembled state also extend into the central opening of the big end to provide the previously discussed rotational locking of the bearing shells.

Optionally in some examples, including in at least one preferred example, the guide is a separate component from the big end and any bearing shells to be received in the central opening of the big end. A technical benefit may include that manufacturing may be facilitated, for example compared to designing the bearing to have some type of integral protrusion that extends into the through hole for achieving rotational locking of the bearing shells.

Optionally in some examples, including in at least one preferred example, the guide has a length which is longer than the length of the through hole. A technical benefit may include that this allows the guide to be pushed/knocked into the through hole from the outside of the big end until the pushed/knocked end of the guide becomes flush with the external surface of the big end. When that happens you know that the guide extends an appropriate length into the central opening of the big end.

Optionally in some examples, including in at least one preferred example, the base part may be provided with a third groove and the cap part may be provided with a fourth groove, wherein in said assembled state, the third groove and the fourth groove together form a hole extending from an external surface of the big end, wherein said guide is a first guide, wherein the connecting rod further comprises a second guide configured to extend inside said hole formed by the third and fourth grooves. A technical benefit may include that further guiding assistance is achieved by providing a second guide. It should be understood that the hole formed by the third and fourth grooves doe not have to be a through hold, it may be a blind hole. While the first guide may advantageously have dual functionality, namely a guiding function during assembling and a rotation preventing function during operation (preventing a bearing shell from rotating), the second guide may suitably only have the guiding function.

Optionally in some examples, including in at least one preferred example, with respect to the inner circular surface of the big end, the hole formed by the third and fourth grooves may be located substantially diametrically opposite to the through hole formed by the first and second grooves. A technical benefit may include that this may provide for an improved guiding function.

Optionally in some examples, including in at least one preferred example, the hole formed by the third and fourth grooves may have a different diameter compared to the diameter of the through hole formed by the first and second grooves, and/or the second guide may have a different diameter compared to the diameter of the first guide. A technical benefit may include that this enables a poka-yoke functionality, avoiding an incorrect orientation of the cap part relative to the base part during reconnection of these two parts.

According to a second aspect of the disclosure, there is provided a connecting rod assembly comprising the connecting rod of the first aspect (including any example thereof) and a bearing which comprises two bearing shells which are in contact with the inner circular surface of the big end, and which are rotationally locked by the guide extending inside said through hole and protruding from the inner circular surface. The second aspect of the disclosure may seek to provide corresponding technical benefits as discussed above in relation to the first aspect and examples thereof.

Optionally in some examples, including in at least one preferred example, the guide extending inside said through hole may have a length which is shorter than the sum of the lengths of the through hole and the thickness of the bearing. A technical benefit may include that when the outer end of the guide is flush with the external surface of the big end, even though the guide provides a rotational locking function to the bearing shells, it will not extend beyond the bearing and will thus not interfere with the bearing function.

According to a third aspect of the disclosure, there is provided a vehicle comprising the connecting rod of the first aspect (including any example thereof) or the connecting rod assembly of the second aspect (including any example thereof). The third aspect of the disclosure may seek to provide corresponding technical benefits as discussed above in relation to the first and second aspects and examples thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a vehicle according to one example.
**FIG. 2** illustrates schematically parts of a connecting rod assembly according to one example.
**FIG. 3** illustrates schematically a side view of a connecting rod according to one example.
**FIG. 4** illustrates a cross-sectional view of the connecting rod in **FIG. 3****.**
**FIG. 5** illustrates a detail of a connecting rod according to one example.
**FIG. 6** illustrates schematically a connecting rod according to another example.

### DETAILED DESCRIPTION

The detailed description set forth below provides information and examples of the disclosed technology with sufficient detail to enable those skilled in the art to practice the disclosure.

Fraction splitting a big end of a crankshaft is a known method for being able to conveniently place a bearing into the big end. However, since the split surfaces are sometimes smooth, it may be challenging to accurately rejoin the two split parts of the big end. According to the present disclosure, however, the big end is provided with a through hole which, when the big end is fraction-split into two parts, is represented by one hole forming groove in one of the split parts and another hole forming groove in the other one of the split parts. Such grooves enable an aligning element to be received for facilitating accurate alignment of the two parts when rejoining the two parts.

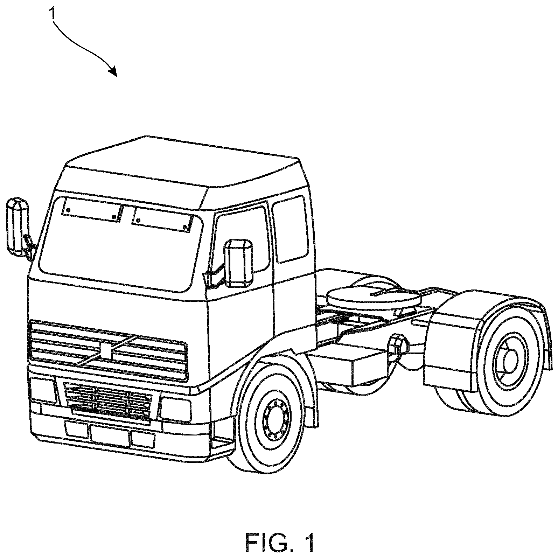

**FIG. 1** schematically illustrates a vehicle **1** according to one example of this disclosure. More specifically, the illustrated vehicle **1** is a heavy-duty vehicle in the form of a tractor unit, which may be configured to pull a trailer unit. However, the teachings of the present disclosure may be implemented for other types of vehicles as well. The vehicle **1** may be a driver-operated vehicles or a self-driving autonomous vehicle. The vehicle **1** may comprise a connecting rod or a connecting rod assembly, such as the ones that have previously been discussed in this disclosure. Examples of such a connecting rod and connecting rod assembly will now be discussed with reference to the other drawing figures.

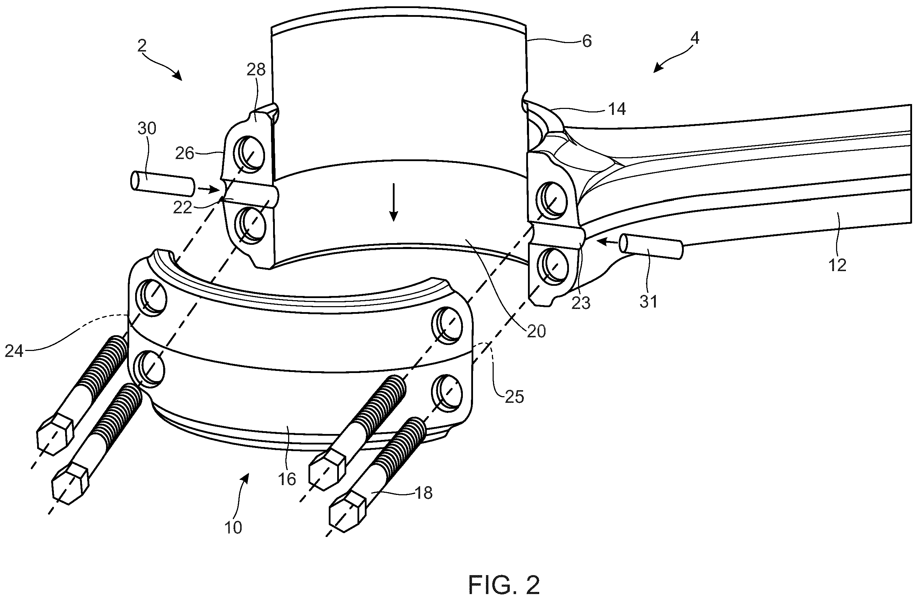

**FIG. 2** illustrates schematically parts of a connecting rod assembly **2** according to one example. The connecting rod assembly comprises a connecting rod **4** and a bearing, wherein the bearing comprises two bearing shells **6** (only one shown in **FIG 2**). The connecting rod **4** is intended to be used in a vehicle, such as the vehicle **1** in **FIG. 1** or in other suitable vehicles. In a vehicle, the connecting rod **4** may serve as a link between a piston of an engine and a crankshaft. The connecting rod **4** turns the reciprocating motion of the piston into a rotational motion of the crankshaft. Accordingly, the connecting rod **4** comprises a small end (not shown in **FIG. 2**) configured to be operatively connected to a piston of a vehicle and a big end **10** configured to be operatively connected to a crankshaft of the vehicle. A shank **12** extends from the small end to the big end **10.**

As illustrated in **FIG. 2****,** the big end **10** comprises a base part **14** located adjacent to the shank **12.** The big end **10** also comprises a cap part **16.** In **FIG. 2****,** the big end **10** is illustrated in a disassembled state. However, the cap part **16** is connectable to the base part **14** by means of at least one fastener **18.** In this example, the connecting rod **4** comprises four fasteners **18** (here illustrated as bolts), however, other number of fasteners are also conceivable, such as two fasteners. The big end **10** will be in an assembled state when the cap part **16** has been connected to the base part **14** by means of said at least one fastener **18.** If the fasteners **18** are removed, the cap part **16** can once again be disconnected from the base part **14** into the illustrated disassembled state.

In the assembled state of the big end **10,** the base part **14** and the cap part **16** together define an inner circular surface **20** of the big end **10.** In its turn, the inner circular surface **20,** in said assembled state, defines a central opening which is configured to receive and house the two bearing shells **6** for contacting the inner circular surface **20** (this is schematically illustrated by the arrow showing how one of the bearing shells 6 is being put in place on the inner circular surface **20**).

The base part **14** is provided with a first groove **22** and the cap part **16** is provided with a second groove **24** (not visible in **FIG. 2**). In the assembled state, the first groove **22** and the second groove **24** together form a through hole extending from an external surface **26** of the big end **10** to the inner circular surface **20.**

As understood from **FIG. 2****,** the big end **10** may be a fraction-split big end **10.** The base part **14** and the cap part **16** may thus form the split parts of the big end **10.** Each one of the base part **14** and the cap part **16** presents a fracture surface **28.** The first groove **22** and the second groove **24** are provided in a respective one of the fracture surfaces **28.** When manufacturing the connecting rod **4** said through hole may suitably be present in the big end **10** before fraction-splitting the big end **10.** Hereby, the location of the through hole may already be predefined before the actual fraction splitting. By purposefully selecting the geometrical plane in which the fraction splitting should be made, the relative proportions between the resulting first groove **22** (in the base part **14**) and second groove **24** (in the cap part **16**) may be controlled. For example, the longitudinal axis of the through hole may suitably be offset relative to the geometrical plane in which the fraction splitting is intended to be made. Thus, in the assembled state of the big end **10,** the longitudinal axis of the through hole may be offset relative to the fracture surfaces **28.** Thus, the depth of one of the first groove **22** and the second groove **24** may be greater than the depth of the other one of the first groove **22** and the second groove **24.**

As further illustrated in **FIG. 2****,** the big end **10** may suitably comprise an aligning element, in particular a guide such as the herein illustrated guide pin **30.** The guide pin **30** may have dual functionality. A first functionality is that the guide pin **30** may extend inside the through hole formed by the first groove **22** and the second groove **24,** and protrude from the inner circular surface **20** into the central opening (formed by the inner circular surface **20** in said assembled state) so as to act as a rotational stop to prevent the received bearing shells **6** from moving in a circumferential direction along the inner circular surface **20.** For instance, the pin **30** may engage a notch, recess or similar in one or both of the bearing shells **6.** If, for example, it is desired to replace the bearing shells **6,** then after disconnecting the cap part **16** from the base part **14,** the guide pin **30** may remain positioned in the deeper one of the first and second grooves **22, 24.** The second functionality of the guide pin **30** is to facilitate alignment between the cap part **16** and the base part **14** when joining them into the assembled state. By making sure that when bringing the two parts **14, 16** together, the other groove will also mate with the guide pin **30,** a correct alignment between the cap part **16** and the base part **14** is achievable, irrespectively of the fracture surfaces **28** being relatively rough or smooth. As can be understood, the guide pin **30** may suitably have an outer diameter which substantially corresponds to the inner diameter of the through hole (formed by the first and second grooves **22, 24** in said assembled state) such that the guide pin **30** has circumferential contact with wall portions defining said through hole. The guide pin **30** may suitably be a separate component from the big end **10** and the bearing shells **6,** which may be inserted into the through hole after fraction splitting. The guide pin **30** may suitably have a length which is shorter than the sum of the lengths of the through hole and the thickness of the bearing. Thus, when the guide pin **30** is flush with the external surface **26** of the big end **10,** it may protrude sufficiently enough to rotationally lock the bearing shells **6,** but short enough to avoid interfering with the inner bearing geometry.

Optionally, as illustrated in **FIG. 2****,** the base part **14** may be provided with a third groove **23.** Analogously to there being a second groove **24** in the cap part **16** opposite to the first groove **22** in the base part **14** to form a through hole, there may similarly be provided a fourth groove **25** in the cap part **16** opposite to the third groove **23** in base part **14.** Thus, in the assembled state, the third groove **23** and the fourth groove **25** may together from a hole extending from the external surface **26** of the big end **10.** Furthermore, similarly to there being a guide pin **30** configured to extend inside the through hole formed by the first and second grooves **22, 24** in the assembled state of the big end **10,** there may also be a guide pin **31** configured to extend inside the hole formed by the third and fourth grooves **23, 25** in the assembled state of the big end **10.** Thus, in general terms, there may be a first guide (here illustrated as guide pin **30**) configured to extend into the through hole formed by the first and second grooves **22, 24,** and a second guide (here illustrated as guide pin **31**) configured to extend inside the hole formed by the third and fourth grooves **23, 25.** Although it can be understood from the illustration of the third groove **23** in **FIG. 2****,** that the hole formed by the third and fourth grooves **23, 25** may be a through hole, it should also be understood that in other examples it may be a blind hole. Thus, in such other examples, the first mentioned guide pin **30** may have the above discussed dual functionality, while the second mentioned guide pin **31** may just have the aligning/guiding functionality (i.e. not the rotational-locking function with respect to the bearing shells **6**).

As can be understood from the illustration in **FIG. 2****,** in at least some examples, with respect to the inner circular surface **20** of the big end **10,** the hole formed by the third and fourth grooves **23, 25** may suitably be located substantially diametrically opposite to the through hole formed by the first and second grooves **22, 24.**

The inner circular surface **20** in **FIG. 2** may suitably be machined together with the guide pin **30.** Hereby, the machine end portion of the guide pin **30** may obtain an integrated shape with the machined inner circular surface **20.** The guide pin **30** will then suitably protrude the same distance into the inner circular surface **20** when the guide pin **30** is pushed in through the through hole.

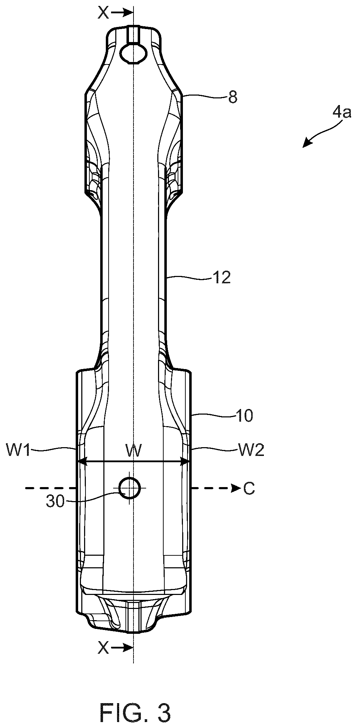

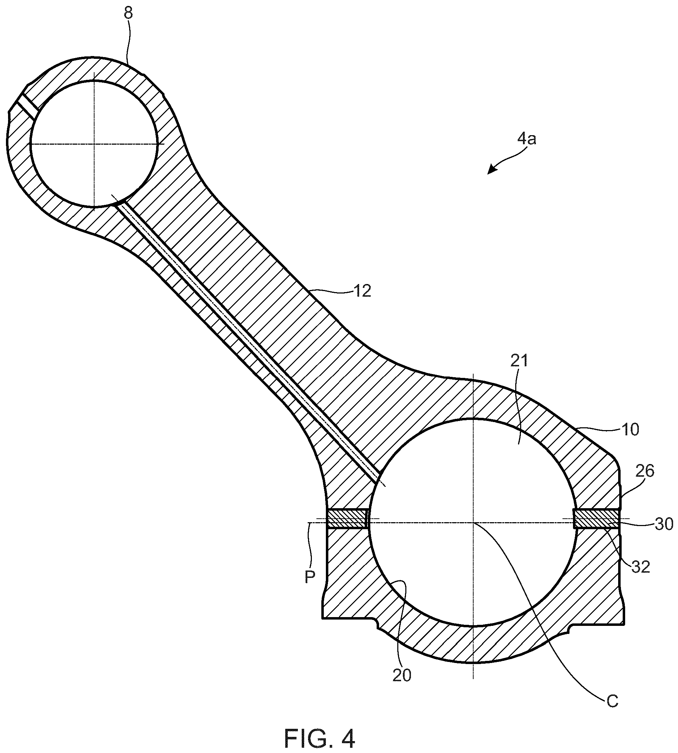

**FIG. 3** illustrates schematically a side view of a connecting rod **4a** according to one example. **FIG. 4** illustrates a cross-sectional view of the connecting rod **4a** in **FIG. 3****,** taken along line **X-X** in **FIG. 3****.**

**FIG. 4** illustrates that the connecting rod **4a** has a small end **8,** a big end **10,** and a shaft **12** interconnecting the small end **8** with the big end **10.** In the assembled state of the big end **10** shown in **FIG. 4****,** it can be seen that the inner circular surface **20** defines a central opening **21.** As can also be seen in **FIG. 4****,** the inner circular surface **20** of the big end **10** may define and extend around a geometrical centre axis **C.**

The view shown in **FIG. 3** demonstrates that the big end **10** may have a width **W** extending in parallel with the geometrical centre axis **C.** In particular, the width **W** may extend from a first width end portion **W1** to a second width end portion **W2.** As can be seen in **FIG. 3** the guide pin **30** (and thus the through hole) is located closer to the first width end portion **W1** than to the second width end portion **W2.** Such a lateral offset of the guide pin **30** and the through hole provides for a poka-yoke function. **FIG. 4** illustrates another offset, namely with respect to the geometrical plane **P** of the fraction split. This offset of the guide pin **30** and the through hole **32** results in that one of the grooves forming the through hole **32** is deeper than the other one of the grooves, as has been discussed previously. As can further be seen in **FIG. 4****,** the guide pin **30** has a length which is longer than the length of the through hole **32.** Hereby, the guide pin **30** may be pushed/knocked from the outside into the through hole **30** until its end becomes flush with the external surface **26** of the big end **10.** In this position, the guide pin **30** extends an appropriate length into the central opening defined by the inner circular surface **20** of the big end **10,** enough to provide the rotation prevention function for the bearing shells.

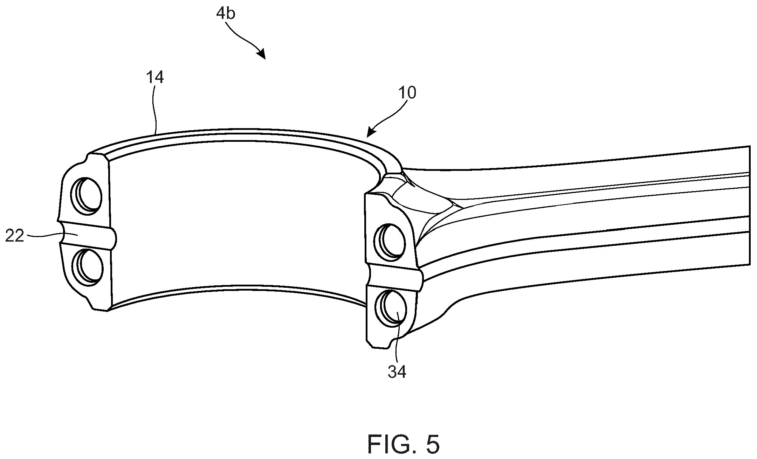

**FIG. 5** illustrates a detail of a connecting rod **4b** according to one example. More specifically, it illustrates the base part **14** in the disassembled state of the big end **10.** As can be seen, there are four bores **34,** suitably threaded bores, provided. The four bores **34** are configured to receive fastener portions. For example, the fasteners (such as the fasteners **18** - shown in the example of **FIG. 2**) may be in the form of bolts having threaded shafts, wherein the threaded shafts of the bolts are to be engaged with the mating threads in the bores **34** when the cap part is connected to the base part **14** of the big end **10.** As can be seen in **FIG. 5****,** the bores **34** extend in a direction substantially perpendicularly to the longitudinal extension of the first groove **22** (and thus perpendicularly to the longitudinal extension of the through hole formed by the first and second grooves). Thus, from this it can be understood that in at least some examples, in the assembled state of the big end **10,** the longitudinal extension of the through hole may be substantially perpendicular to the longitudinal extension of said at least one fastener.

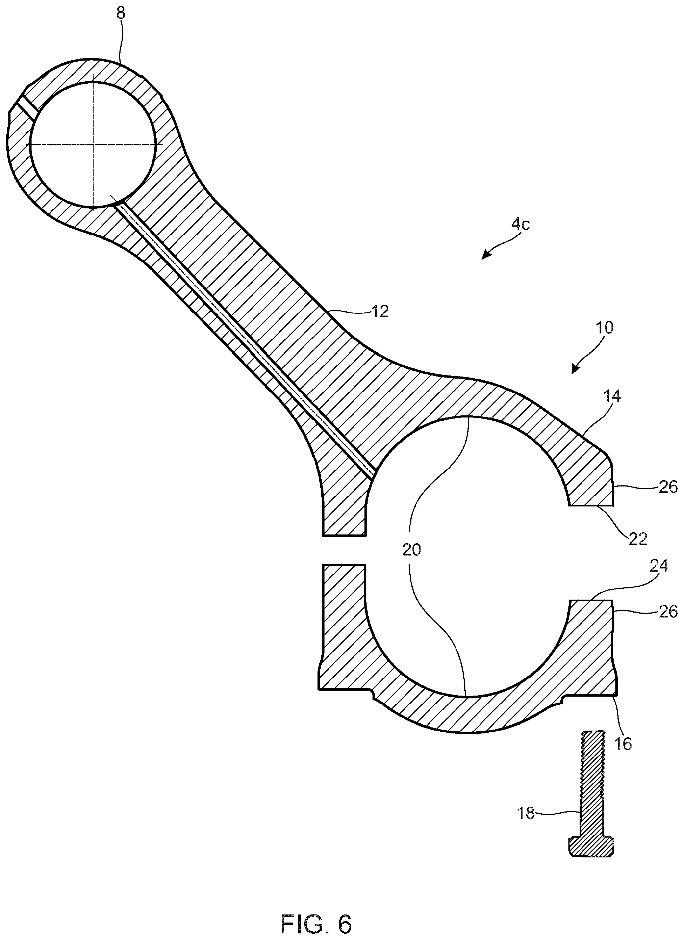

**FIG. 6** illustrates schematically (in a cross-sectional view) a connecting rod **4c** according to another example. In particular, **FIG. 6** schematically illustrates a connecting rod **4c** for a vehicle, the connecting rod **4c** comprising:
a small end **8** configured to be operatively connected to a piston of a vehicle,
a big end **10** configured to be operatively connected to a crankshaft of the vehicle, and
a shank **12** extending from the small end to the big end **10,** and
at least one fastener **18,**
wherein the big end **10** comprises:
   - a base part **14** located adjacent to the shank **12,** and
   - a cap part **16,**
wherein the cap part **16** is connectable to the base part **14,** by said at least one fastener **18,**
into an assembled state of the big end **10,** and is disconnectable from the base part **14** into a disassembled state of the big end **10** (**FIG. 6** showing the disassembled state of the big end **10**),
wherein, in said assembled state of the big end **10,** the base part **14** and the cap part **16** together define an inner circular surface **20** of the big end **10,** the inner circular surface defining **20** a central opening which is configured to receive and house two bearing shells for contacting said inner circular surface **20,**
wherein the base part **14** is provided with a first groove **22** and the cap part **16** is provided with a second groove **24,** wherein in said assembled state, the first groove **22** and the second groove **24** together form a through hole extending from an external surface **26** of the big end **10** to said inner circular surface **20.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A connecting rod (4, 4a, 4b, 4c) for a vehicle (1), the connecting rod (4, 4a, 4b, 4c) comprising:
a small end (8) configured to be operatively connected to a piston of a vehicle (1),
a big end (10) configured to be operatively connected to a crankshaft of the vehicle (1), and
a shank (12) extending from the small end (8) to the big end (10), and
at least one fastener (18),
wherein the big end (10) comprises:
- a base part (14) located adjacent to the shank (12), and
- a cap part (16),
wherein the cap part (16) is connectable to the base part (14), by said at least one fastener (18), into an assembled state of the big end (10), and is disconnectable from the base part (14) into a disassembled state of the big end (10),
wherein, in said assembled state of the big end (10), the base part (14) and the cap part (16) together define an inner circular surface (20) of the big end (10), the inner circular surface (20) defining a central opening (21) which is configured to receive and house two bearing shells (6) for contacting said inner circular surface (20),
wherein the base part (14) is provided with a first groove (22) and the cap part (16) is provided with a second groove (24), **characterized in that** in said assembled state, the first groove (22) and the second groove (24) together form a through hole extending from an external surface (26) of the big end (10) to said inner circular surface (20).

2. The connecting rod (4, 4a, 4b, 4c) of claim 1, wherein the big end (10) is a fracture-split big end (10), wherein the base part (14) and the cap part (16) form the split parts of the big end (10), each one presenting a fracture surface (28), wherein the first and the second grooves (22, 24) are provided in a respective one of said fracture surfaces (28).

3. The connecting rod (4, 4a, 4b, 4c) of claim 2, wherein the through hole has a longitudinal axis, wherein, in said assembled state of the big end (10), the longitudinal axis is offset relative to the fracture surfaces (28).

4. The connecting rod (4, 4a, 4b, 4c) of any one of claims 1-3, wherein the depth of one of the first and second grooves (22, 24) is greater than the depth of the other one of the first and second grooves (22, 24).

5. The connecting rod (4, 4a, 4b, 4c) of any of claims 1-4, wherein the inner circular surface (20) of the big end (10) defines and extends around a geometrical centre axis (C), wherein the big end (10) has a width (W) extending in parallel with said geometrical centre axis (C), said width (W) extending from a first width end portion (W1) to a second width end portion (W2), wherein the through hole is located closer to one of said width end portions (W1, W2) than to the other one.

6. The connecting rod (4, 4a, 4b, 4c) of any of claims 1-5, wherein in said assembled state of the big end (10), the longitudinal extension of the through hole is substantially perpendicular to the longitudinal extension of said at least one fastener (18).

7. The connecting rod (4, 4a, 4b, 4c) of any one of claims 1-6, further comprising a guide (30) configured to extend inside said through hole and to protrude from the inner circular surface (20) into said central opening (21) so as to act as a rotational stop to prevent bearing shells (6) that have been received from moving in a circumferential direction along the inner circular surface (20).

8. The connecting rod (4, 4a, 4b, 4c) of claim 7, wherein the guide (30) comprises, or is in the form of, a guide pin (30) having an outer diameter which substantially corresponds to the inner diameter of the through hole such that the guide pin (30) has circumferential contact with wall portions defining said through hole.

9. The connecting rod (4, 4a, 4b, 4c) of any of claims 7-8, wherein the guide (30) is a separate component from the big end (10) and any bearing shells (6) to be received in the central opening (21) of the big end (10).

10. The connecting rod (4, 4a, 4b, 4c) of any of claims 7-9, wherein the guide (30) has a length which is longer than the length of the through hole.

11. The connecting rod (4, 4a, 4b, 4c) of claim any of claims 7-10, wherein the base part (14) is provided with a third groove (23) and the cap part (16) is provided with a fourth groove (25), wherein in said assembled state, the third groove (23) and the fourth groove (25) together form a hole extending from an external surface (26) of the big end (10), wherein said guide (30) is a first guide (30), wherein the connecting rod (4, 4a, 4b, 4c) further comprises a second guide (31) configured to extend inside said hole formed by the third and fourth grooves (23, 25).

12. The connecting rod (4, 4a, 4b, 4c) of claim 11, wherein, with respect to the inner circular surface (20) of the big end (10), the hole formed by the third and fourth grooves (23, 25) is located substantially diametrically opposite to the through hole formed by the first and second grooves (22, 24).

13. The connecting rod (4, 4a, 4b, 4c) of any of claims 9-10, wherein the hole formed by the third and fourth grooves (23, 25) has a different diameter compared to the diameter of the through hole formed by the first and second grooves (22, 24), and/or the second guide (31) has a different diameter compared to the diameter of the first guide (31).

14. A connecting rod assembly (2) comprising:
- the connecting rod (4, 4a, 4b, 4c) of any of claims 7-13, and
- a bearing which comprises two bearing shells (6) which are in contact with the inner circular surface (20) of the big end (10), and which are rotationally locked by the guide (30) extending inside said through hole and protruding from the inner circular surface (20).

15. The connecting rod assembly (2) of claim 14, wherein the guide (30) extending inside said through hole has a length which is shorter than the sum of the lengths of the through hole and the thickness of the bearing.

16. A vehicle (1) comprising the connecting rod (4, 4a, 4b, 4c) of any of claims 1-13 or the connecting rod (2) assembly according to any of claims 14-15.

## Patentansprüche

1. Pleuelstange (4, 4a, 4b, 4c) für ein Fahrzeug (1), wobei die Pleuelstange (4, 4a, 4b, 4c) Folgendes umfasst:
ein kleines Ende (8), das dazu konfiguriert ist, mit einem Kolben eines Fahrzeugs (1) wirkverbunden zu sein,
ein großes Ende (10), das dazu konfiguriert ist, mit einer Kurbelwelle des Fahrzeugs (1) wirkverbunden zu sein, und
einen Schaft (12), der sich von dem kleinen Ende (8) zu dem großen Ende (10) erstreckt, und
mindestens ein Befestigungselement (18),
wobei das große Ende (10) Folgendes umfasst:
- ein Basisteil (14), das benachbart zu dem Schaft (12) angeordnet ist, und
- ein Kappenteil (16),
wobei das Kappenteil (16) durch das mindestens eine Befestigungselement (18) mit dem Basisteil (14) zu einem zusammengebauten Zustand des großen Endes (10) verbindbar ist und von dem Basisteil (14) zu einem auseinandergebauten Zustand des großen Endes (10) trennbar ist,
wobei in dem zusammengebauten Zustand des großen Endes (10) das Basisteil (14) und das Kappenteil (16) zusammen eine innere kreisförmige Fläche (20) des großen Endes (10) definieren, wobei die innere kreisförmige Fläche (20) eine mittige Öffnung (21) definiert, die dazu konfiguriert ist, zwei Lagerschalen (6) zum Kontaktieren der inneren kreisförmigen Fläche (20) aufzunehmen und unterzubringen,
wobei das Basisteil (14) mit einer ersten Nut (22) versehen ist und das Kappenteil (16) mit einer zweiten Nut (24) versehen ist,
**dadurch gekennzeichnet, dass** in dem zusammengebauten Zustand die erste Nut (22) und die zweite Nut (24) zusammen ein Durchgangsloch bilden, das sich von einer Außenfläche (26) des großen Endes (10) zu der inneren kreisförmigen Fläche (20) erstreckt.

2. Pleuelstange (4, 4a, 4b, 4c) nach Anspruch 1, wobei das große Ende (10) ein bruchgetrenntes großes Ende (10) ist, wobei das Basisteil (14) und das Kappenteil (16) die getrennten Teile des großen Endes (10) bilden, wobei jedes einzelne eine Bruchfläche (28) präsentiert, wobei die erste und die zweite Nut (22, 24) in einer jeweiligen der Bruchflächen (28) bereitgestellt sind.

3. Pleuelstange (4, 4a, 4b, 4c) nach Anspruch 2, wobei das Durchgangsloch eine Längsachse aufweist, wobei die Längsachse in dem zusammengebauten Zustand des großen Endes (10) relativ zu der Bruchfläche (28) versetzt ist.

4. Pleuelstange (4, 4a, 4b, 4c) nach einem der Ansprüche 1-3, wobei die Tiefe von einer von der ersten und der zweiten Nut (22, 24) größer als die Tiefe der anderen von der ersten und der zweiten Nut (22, 24) ist.

5. Pleuelstange (4, 4a, 4b, 4c) nach einem der Ansprüche 1-4, wobei die innere kreisförmige Fläche (20) des großen Endes (10) eine geometrische Mittelachse (C) definiert und sich darum erstreckt, wobei das große Ende (10) eine Breite (W) aufweist, die sich parallel zu der geometrischen Mittelachse (C) erstreckt, wobei sich die Breite (W) von einem ersten Breitenendabschnitt (W1) zu einem zweiten Breitenendabschnitt (W2) erstreckt, wobei das Durchgangsloch näher an einem der Breitenendabschnitte (W1, W2) als an dem anderen angeordnet ist.

6. Pleuelstange (4, 4a, 4b, 4c) nach einem der Ansprüche 1-5, wobei in dem zusammengebauten Zustand des großen Endes (10) die Längserstreckung des Durchgangslochs im Wesentlichen senkrecht zu der Längserstreckung des mindestens einen Befestigungselements (18) ist.

7. Pleuelstange (4, 4a, 4b, 4c) nach einem der Ansprüche 1-6, ferner umfassend eine Führung (30), die dazu konfiguriert ist, sich innerhalb des Durchgangslochs zu erstreckten und von der inneren kreisförmigen Fläche (20) in die mittige Öffnung (21) vorzustehen, um so als ein Drehanschlag zu wirken, um zu verhindern, dass sich die Lagerschalen (6), die aufgenommen wurden, in einer Umfangsrichtung entlang der inneren kreisförmigen Fläche (20) bewegen.

8. Pleuelstange (4, 4a, 4b, 4c) nach Anspruch 7, wobei die Führung (30) einen Führungsstift (30) umfasst oder in einer solchen Form vorliegt, der einen Außendurchmesser aufweist, der im Wesentlichen dem Innendurchmesser des Durchgangslochs entspricht, so dass der Führungsstift (30) umlaufenden Kontakt mit Wandabschnitten, die das Durchgangsloch definieren, aufweist.

9. Pleuelstange (4, 4a, 4b, 4c) nach einem der Ansprüche 7-8, wobei die Führung (30) eine getrennte Komponente von dem großen Ende (10) und beliebigen Lagerschalen (6), die in der mittigen Öffnung (21) des großen Endes (10) aufzunehmen sind, ist.

10. Pleuelstange (4, 4a, 4b, 4c) nach einem der Ansprüche 7-9, wobei die Führung (30) eine Länge aufweist, die länger als die Länge des Durchgangslochs ist.

11. Pleuelstange (4, 4a, 4b, 4c) nach einem der Ansprüche 7-10, wobei das Basisteil (14) mit einer dritten Nut (23) versehen ist und das Kappenteil (16) mit einer vierten Nut (25) versehen ist, wobei in dem zusammengebauten Zustand die dritte Nut (23) und die vierte Nut (25) zusammen ein Loch bilden, das sich von einer Außenfläche (26) des großen Endes (10) erstreckt, wobei die Führung (30) eine erste Führung (30) ist, wobei die Pleuelstange (4, 4a, 4b, 4c) ferner eine zweite Führung (31) umfasst, die dazu konfiguriert ist, sich innerhalb des Lochs zu erstrecken, das durch die dritte und die vierte Nut (23, 25) gebildet ist.

12. Pleuelstange (4, 4a, 4b, 4c) nach Anspruch 11, wobei in Bezug auf die innere kreisförmige Fläche (20) des großen Endes (10) das Loch, das durch die dritte und die vierte Nut (23, 25) gebildet ist, im Wesentlichen diametral entgegengesetzt zu dem Durchgangsloch, das durch die erste und die zweite Nut (22, 24) gebildet ist, angeordnet ist.

13. Pleuelstange (4, 4a, 4b, 4c) nach einem der Ansprüche 9-10, wobei das Loch, das durch die dritte und die vierte Nut (23, 25) gebildet ist, im Vergleich zu dem Durchmesser des Durchgangslochs, das durch die erste und die zweite Nut (22, 24) gebildet ist, einen anderen Durchmesser aufweist und/oder die zweite Führung (31) im Vergleich zu dem Durchmesser der ersten Führung (31) einen anderen Durchmesser aufweist.

14. Pleuelstangenbaugruppe (2), umfassend:
- die Pleuelstange (4, 4a, 4b, 4c) nach einem der Ansprüche 7-13 und
- ein Lager, das zwei Lagerschalen (6) umfasst, die mit der inneren kreisförmigen Fläche (20) des großen Endes (10) in Kontakt stehen und die mit der Führung (30), die sich innerhalb des Durchgangslochs erstreckt und von der inneren kreisförmigen Fläche (20) vorsteht, drehschlüssig ist.

15. Pleuelstangenbaugruppe (2) nach Anspruch 14, wobei die Führung (30), die sich innerhalb des Durchgangslochs erstreckt, eine Länge aufweist, die kürzer als die Summe der Längen des Durchgangslochs und der Dicke des Lagers ist.

16. Fahrzeug (1), umfassend die Pleuelstange (4, 4a, 4b, 4c) nach einem der Ansprüche 1-13 oder die Pleuelstangenbaugruppe (2) nach einem der Ansprüche 14-15.

## Revendications

1. Bielle (4, 4a, 4b, 4c) pour un véhicule (1), la bielle (4, 4a, 4b, 4c) comprenant :
une petite extrémité (8) configurée pour être reliée de manière opérationnelle à un piston d'un véhicule (1),
une grande extrémité (10) configurée pour être reliée de manière opérationnelle à un vilebrequin du véhicule (1), et
une tige (12) s'étendant à partir de la petite extrémité (8) jusqu'à la grande extrémité (10), et
au moins une attache (18),
dans laquelle la grande extrémité (10) comprend :
- une partie de base (14) située adjacente à la tige (12), et
- une partie de chapeau (16),
dans laquelle la partie de chapeau (16) peut être reliée à la partie de base (14), par ladite au moins une attache (18), dans un état assemblé de la grande extrémité (10), et peut être déconnectée de la partie de base (14) dans un état désassemblé de la grande extrémité (10),
dans laquelle, dans ledit état assemblé de la grande extrémité (10), la partie de base (14) et la partie de chapeau (16) définissent ensemble une surface circulaire intérieure (20) de la grande extrémité (10), la surface circulaire intérieure (20) définissant une ouverture centrale (21) qui est configurée pour recevoir et loger deux demi-coussinets (6) pour venir en contact avec ladite surface circulaire intérieure (20),
dans laquelle la partie de base (14) est pourvue d'une première rainure (22) et la partie de chapeau (16) est pourvue d'une deuxième rainure (24), **caractérisée en ce que** dans ledit état assemblé, la première rainure (22) et la deuxième rainure (24) forment ensemble un trou traversant s'étendant à partir d'une surface externe (26) de la grande extrémité (10) jusqu'à ladite surface circulaire intérieure (20).

2. Bielle (4, 4a, 4b, 4c) selon la revendication 1, dans laquelle la grande extrémité (10) est une grande extrémité (10) séparée par rupture, dans laquelle la partie de base (14) et la partie de chapeau (16) forment les parties séparées de la grande extrémité (10), chacune présentant une surface de rupture (28), dans laquelle la première et la deuxième rainures (22, 24) sont prévues dans l'une respective desdites surfaces de rupture (28).

3. Bielle (4, 4a, 4b, 4c) selon la revendication 2, dans laquelle le trou traversant présente un axe longitudinal, dans laquelle, dans ledit état assemblé de la grande extrémité (10), l'axe longitudinal est décalé par rapport aux surfaces de rupture (28).

4. Bielle (4, 4a, 4b, 4c) selon l'une quelconque des revendications 1 à 3, dans laquelle la profondeur de l'une des première et deuxième rainures (22, 24) est supérieure à la profondeur de l'autre des première et deuxième rainures (22, 24).

5. Bielle (4, 4a, 4b, 4c) selon l'une quelconque des revendications 1 à 4, dans laquelle la surface circulaire intérieure (20) de la grande extrémité (10) définit et s'étend autour d'un axe central géométrique (C), dans laquelle la grande extrémité (10) présente une largeur (W) s'étendant parallèlement audit axe central géométrique (C), ladite largeur (W) s'étendant à partir d'une première partie d'extrémité de largeur (W1) jusqu'à une deuxième partie d'extrémité de largeur (W2), dans laquelle le trou traversant est situé plus près de l'une desdites parties d'extrémité de largeur (W1, W2) que de l'autre.

6. Bielle (4, 4a, 4b, 4c) selon l'une quelconque des revendications 1 à 5, dans laquelle dans ledit état assemblé de la grande extrémité (10), l'extension longitudinale du trou traversant est sensiblement perpendiculaire à l'extension longitudinale de ladite au moins une attache (18).

7. Bielle (4, 4a, 4b, 4c) selon l'une quelconque des revendications 1 à 6, comprenant en outre un guide (30) configuré pour s'étendre à l'intérieur dudit trou traversant et pour faire saillie à partir de la surface circulaire intérieure (20) dans ladite ouverture centrale (21) de manière à agir comme une butée de rotation pour empêcher les demi-coussinets (6) ayant été reçus de se déplacer dans une direction circonférentielle le long de la surface circulaire intérieure (20).

8. Bielle (4, 4a, 4b, 4c) selon la revendication 7, dans laquelle le guide (30) comprend, ou se présente sous la forme de, une broche de guidage (30) présentant un diamètre extérieur qui correspond sensiblement au diamètre intérieur du trou traversant de sorte que la broche de guidage (30) présente un contact circonférentiel avec des parties de paroi définissant ledit trou traversant.

9. Bielle (4, 4a, 4b, 4c) selon l'une quelconque des revendications 7 à 8, dans laquelle le guide (30) est un composant séparé de la grande extrémité (10) et de tous demi-coussinets (6) devant être reçus dans l'ouverture centrale (21) de la grande extrémité (10).

10. Bielle (4, 4a, 4b, 4c) selon l'une quelconque des revendications 7 à 9, dans laquelle le guide (30) présente une longueur qui est plus longue que la longueur du trou traversant.

11. Bielle (4, 4a, 4b, 4c) selon l'une quelconque des revendications 7 à 10, dans laquelle la partie de base (14) est pourvue d'une troisième rainure (23) et la partie de chapeau (16) est pourvue d'une quatrième rainure (25), dans laquelle dans ledit état assemblé, la troisième rainure (23) et la quatrième rainure (25) forment ensemble un trou s'étendant à partir d'une surface externe (26) de la grande extrémité (10), dans laquelle ledit guide (30) est un premier guide (30), dans laquelle la bielle (4, 4a, 4b, 4c) comprend en outre un deuxième guide (31) configuré pour s'étendre à l'intérieur dudit trou formé par les troisième et quatrième rainures (23, 25).

12. Bielle (4, 4a, 4b, 4c) selon la revendication 11, dans laquelle, par rapport à la surface circulaire intérieure (20) de la grande extrémité (10), le trou formé par les troisième et quatrième rainures (23, 25) est situé de manière sensiblement diamétralement opposée au trou traversant formé par les première et deuxième rainures (22, 24).

13. Bielle (4, 4a, 4b, 4c) selon l'une quelconque des revendications 9 à 10, dans laquelle le trou formé par les troisième et quatrième rainures (23, 25) présente un diamètre différent par rapport au diamètre du trou traversant formé par les première et deuxième rainures (22, 24), et/ou le deuxième guide (31) présente un diamètre différent par rapport au diamètre du premier guide (31).

14. Ensemble de bielle (2) comprenant :
- la bielle (4, 4a, 4b, 4c) selon l'une quelconque des revendications 7 à 13, et
- un palier qui comprend deux demi-coussinets (6) qui sont en contact avec la surface circulaire intérieure (20) de la grande extrémité (10), et qui sont verrouillés en rotation par le guide (30) s'étendant à l'intérieur dudit trou traversant et faisant saillie à partir de la surface circulaire intérieure (20).

15. Ensemble de bielle (2) selon la revendication 14, dans laquelle le guide (30) s'étendant à l'intérieur dudit trou traversant présente une longueur qui est plus courte que la somme des longueurs du trou traversant et de l'épaisseur du palier.

16. Véhicule (1) comprenant la bielle (4, 4a, 4b, 4c) selon l'une quelconque des revendications 1 à 13 ou l'ensemble de bielle (2) selon l'une quelconque des revendications 14 à 15.
